# EUROPEAN PATENT APPLICATION

(11) **EP 4 742 174 A1**
(43) Date of publication of application: **13.05.2026**
(21) Application number: 25208917.2
(22) Date of filing: 15.10.2025
(51) Int. Cl.: G06V 10/20, G06T 7/50, G06T 7/70, G06V 10/82, G06V 20/64

(54) **METHODS AND DEVICES FOR DETECTION OF ARBITRARY THREE-DIMENSIONAL OBJECTS**

(30) Priority: 06.11.2024 SE 2451109
(71) Applicant: Sony Group Corporation, Tokyo 108-0075 (JP)
(72) Inventor: MOLINER, Olivier, Basingstoke, RG22 4SB (GB)
(74) Representative: Aera A/S

(57) **Abstract**

A method is disclosed. The method comprises obtaining first data from a first 2D image of a scene and second data from a second 2D image of the scene. The method comprises determining a first 2D object mask of an object that appears in the first and second 2D images. The method comprises determining a second 2D object mask of the object. The method comprises generating, for the first 2D object mask, a first depth map comprising first information indicative of a distance from the object to the camera. The method comprises determining a first scale parameter and a first shift parameter based on projecting the first information onto the second 2D image. The method comprises generating a second depth map based on the first scale parameter and the first shift parameter, the second depth map comprising second information indicative of the distance from the object to the camera.

## Description

The present disclosure relates to a method or methods for detection of arbitrary three-dimensional, 3D, objects and to related devices.

### BACKGROUND

Three-dimensional, 3D, object detectors typically employ closed-set methods, which relay on models trained to detect a limited set of predefined object categories. Extending these models to new domains requires collecting and annotating new data and retraining the models, which is both costly and time-consuming. Open-vocabulary 3D object detection is an emerging field in computer vision that aims to identify and localize arbitrary, previously unseen objects in 3D by leveraging semantic information from large-scale language models. However, existing open-vocabulary 3D object detection schemes often lack scalability and generalizability.

### SUMMARY

As described herein, some open-vocabulary 3D detection models may operate on point-cloud and/or more complex data known as red, green, blue, depth, RGB-D, data. Handling such complex data may involve cost-prohibitively complex hardware and/or unreasonably large amounts of image data. Some open-vocabulary 3D detection models also rely on models trained on certain datasets and may not perform well when applied to other data unless the models are retrained.

Accordingly, there is a need for devices and methods for detection of arbitrary three-dimensional, 3D, objects, which mitigate, alleviate or address the shortcomings existing and provide for obtaining and refining two-dimensional, 2D, image data to support reliable 3D object representations without undue hardware complexity, without unreasonably large data sets, and without the need to retrain models.

A method is disclosed, performed by an electronic device, for detection of arbitrary 3D objects. The method comprises obtaining first data from a first 2D image of a scene and optionally second data from a second 2D image of the scene. The method comprises determining, based on the first data, a first 2D object mask of an object that appears in the first 2D image and the second 2D image. Optionally, the method comprises determining, based on the second data, a second 2D object mask of the object. The method comprises generating, for the first 2D object mask, a first depth map comprising first information indicative of a distance from the object to the camera. The method comprises determining a first scale parameter and a first shift parameter based on projecting the first information onto the second 2D image. The method comprises generating, for the first 2D object mask, a second depth map based on the first scale parameter and the first shift parameter. The second depth map comprises second information indicative of the distance from the object to the camera.

Further, an electronic device is provided. The electronic device comprises memory circuitry and processor circuitry. The electronic device is configured to obtain first data from a first 2D image of a scene and optionally second data from a second 2D image of the scene. The electronic device is configured determine, based on the first data, a first 2D object mask of an object that appears in the first 2D image and the second 2D image. The electronic device may optionally be configured to determine, based on the second data, a second 2D object mask of the object. The electronic device is configured to generate, for the first 2D object mask, a first depth map comprising first information indicative of a distance from the object to the camera. The electronic device is configured to determine a first scale parameter and a first shift parameter based on projecting the first information onto the second 2D image. The electronic device is configured to generate for the first 2D object mask, a second depth map based on the first scale parameter and the first shift parameter, the second depth map comprising second information indicative of the distance from the object to the camera.

It is an advantage of the disclosed method and electronic device that arbitrary 3D objects may be detected using an open-vocabulary scheme with 2D images as input, allowing for reduced complexity hardware.

Further, the disclosed method and electronic device may advantageously enable that arbitrary 3D objects, such as objects different from those use to train a neural network and/or model, may be detected, such as identified, without the need to retrain such neural networks and/or models.

Further, the disclosed method and electronic device may advantageously facilitate interaction between virtual and physical worlds and/or may provide for analytics and/or evaluation of environments (real and/or built) and people interacting with those environments.

It is a further advantage of the present disclosure that it may allow for occupancy prediction, utilization analytics, asset tracking, and/or safety monitoring of indoor and/or outdoor environments, which may support planning and operational objectives for such environments.

### BRIEF DESCRIPTION OF THE DRAWINGS

The above and other features and advantages of the present disclosure will become readily apparent to those skilled in the art by the following detailed description of example embodiments thereof with reference to the attached drawings, in which:
Fig. 1 is a diagram illustrating an example object detection system comprising one or more example electronic devices and an example server device according to this disclosure,
Figs. 2A-2B is a flow-chart illustrating an example method, performed by an electronic device, for detection of arbitrary 3D objects according to this disclosure,
Fig. 3 is a flow-chart illustrating an example method, performed by an electronic device, for detection of arbitrary 3D objects according to this disclosure,
Fig. 4 is a block diagram illustrating an example electronic device according to this disclosure, and
Fig. 5 is a block diagram illustrating an example server device according to this disclosure.

### DETAILED DESCRIPTION

Various example embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the disclosure or as a limitation on the scope of the disclosure.

In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

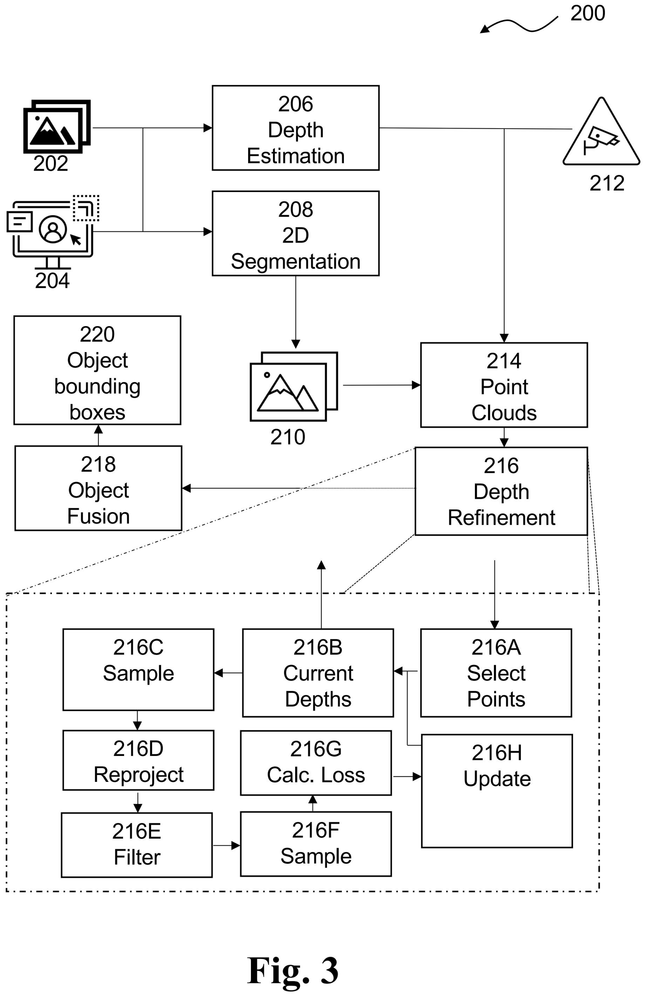

Disclosed herein is a method and corresponding electronic device for open-vocabulary 3D arbitrary object detection (such as detection without object-specific training using as input multi-view red, green, blue, RGB, images (such as 2D images). Certain trained models (such as those described with reference to Fig. 3) may be used to estimate depth and semantic segments in each image, which yield 3D point clouds for one or more objects found in the images. Initially estimated (such as predicted) depth of one or more objects in the image is then refined on a per-depth map basis for each view. As disclosed, the same object seen from different views can have different appearances, making it difficult to use appearance-based objective functions to optimize the depth maps. The solutions provided herein may thus leverage semantic information, which is less affected by changes in viewpoint.

The figures are schematic and simplified for clarity, and they merely show details which aid understanding the disclosure, while other details have been left out. Throughout, the same reference numerals are used for identical or corresponding parts.

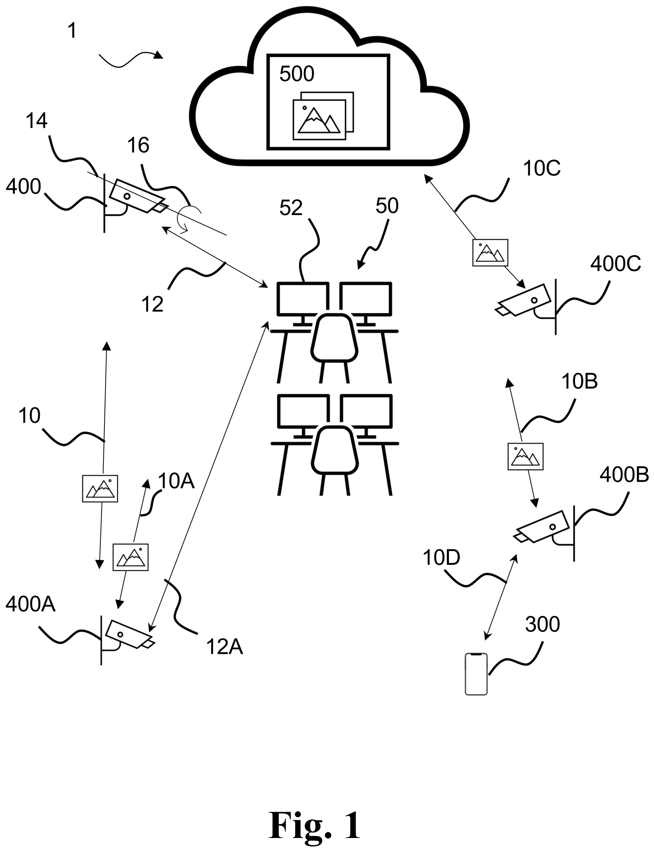

Fig. 1 is a diagram illustrating an example object detection system 1, such as an arbitrary 3D object detection system, comprising example electronic devices 400, 400A, 400B, and 400C and an example server device 500, according to this disclosure.

The object detection system 1 may also include a wireless device 300 in some examples. The wireless device 300, electronic devices 400-400C, and the server device 500 may communicate with one another via communication links 10, 10A, 10B, 10C, and/or 10D, which may be wired or wireless and/or unidirectional or bi-directional in various examples.

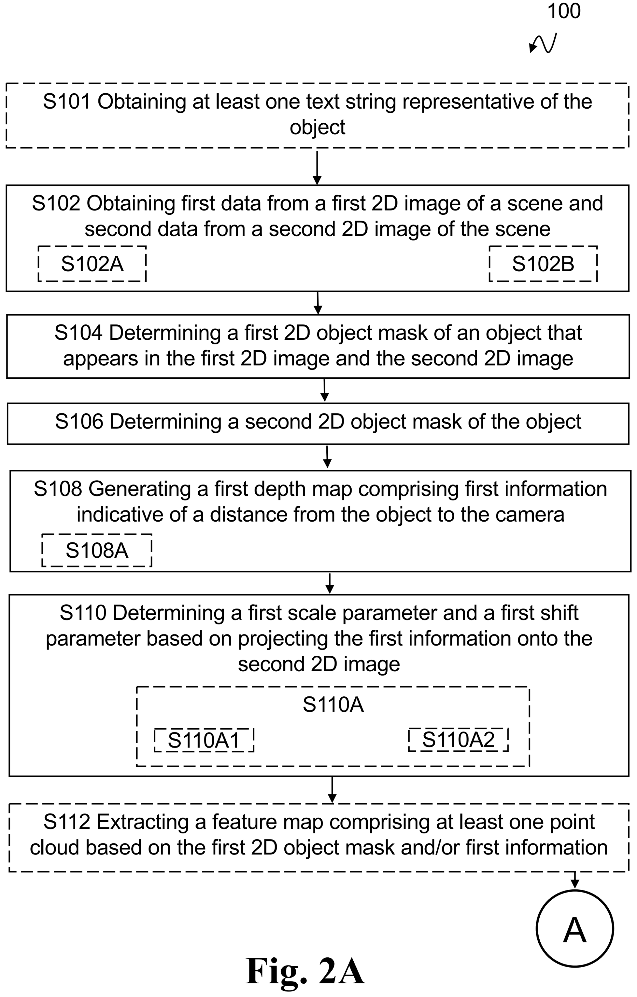

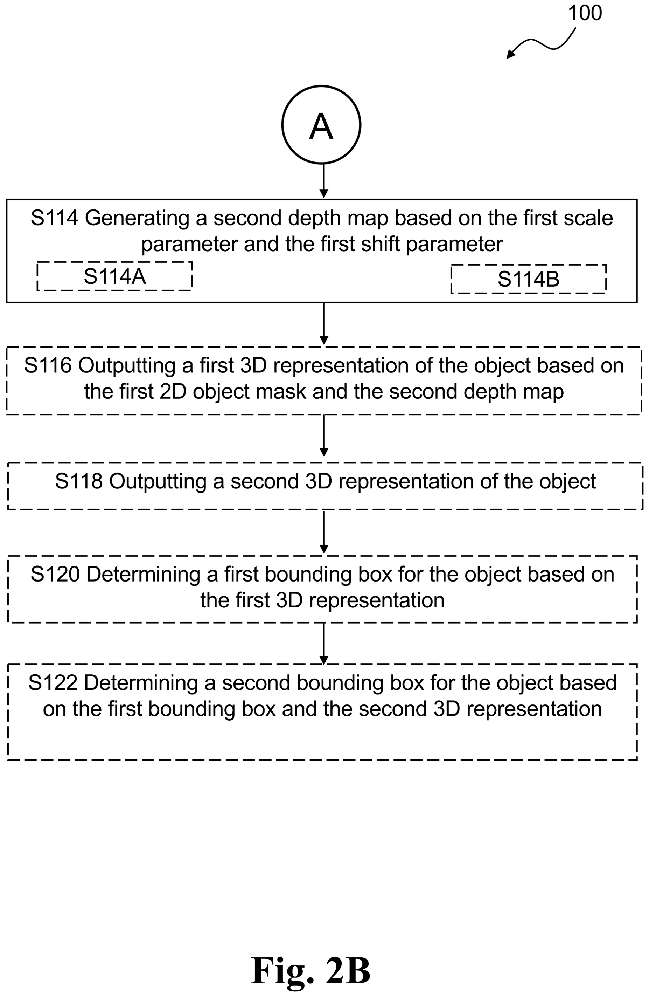

One or more of the electronic devices 400-400C may be positioned to view and, for example, capture images of, scene 50. Electronic device 400 and 400A may be a distance 12 and 12A, respectively from an object 52 in scene 50. The scene may be as described below with reference to Figs. 2A and 2B. The scene 50 may include an interior and/or exterior of a building, a landscape, a storage and/or container unit, or the like.

Further examples of the scene are described herein. The scene 50 may include objects, in addition to object 52, which may be animate or inanimate objects. In one or more examples, the objects may comprise one or more persons.

In one or more examples, at least one electronic device 400-400C is a camera, which may be configured within or attached inside or outside a building, on a terrestrial or aerial vehicle, on or within a submersible unit, or the like. In some examples, the camera may be configured to operate with one or more other cameras and/or to communicate with (such as operate under the control of) a server device 500, such as a server. The server device 500 may for example be external to the electronic device 400A-C. The electronic device 400A-C (such as the camera) may for example be configured to communicate with (such as operate under the control of one or more computing devices capable of manual and/or autonomous control of the system 1 and/or aspects thereof. Wireless device 300 may be a mobile phone that includes a camera and/or may be configured to perform one or more of the functions of an electronic device 400. The server device 500 may be a camera and/or may be configured to perform one or more of the functions herein.

By way of example, the system 1 may be configured to detect an object 52 within scene 50. Object 52 may be understood as an arbitrary object because system 1 may include, for example, a neural network and/or model that was trained without reference to object 52. According to this disclosure, the electronic device 400 may obtain data from 2D, images of the scene 50, which images include object 52. For example, electronic device 400 may capture one or more 2D images (such as red, green and blue, RGB, images) of the scene 50. Electronic device 400 may also transmit and/or receive one or more 2D images of the scene 50 from other electronic devices 400A-400C via links 10-10C. The electronic device 400 may determine based on the data one or more 2D object mask(s) (such as described with reference to Figs. 2A-2B) of the object 52. The electronic device 400 may generate a first depth map (such as described with reference to Figs. 2A-2B), which comprises information indicative of the distance 12 from the object 52 to the electronic device 400. The electronic device 400 may determine a first scale parameter and a first shift parameter (such as described with reference to Figs. 2A-2B), and the electronic device 400 may generate a second depth map based on the first scale parameter and the first shift parameters (such as described with reference to Figs. 2A-2B). The second depth map may comprise second information indicative of the distance 12 from the object 52 to the electronic device 400. Certain parameters of electronic device 400, such as intrinsic features 14 (such as focal length, aperture, field-of-view, resolution) and poses 16 (such as position, orientation, tilt, pan angle) may be used to generate (such as refine) the second depth map.

As described further herein, the electronic device 400, may thus determine and then refine depth maps (such as depth estimations) of the object 52, and then use such refined depth maps to perform object detection.

The wireless device 300 can be seen as a user device, such as mobile phone, a tablet, a laptop, a wearable, a personal computer, etc. In some examples, the server device 500 may act as a server of a client-server architecture, where in some examples, the electronic device 400 and/or the wireless device 300 act as a client.

The various devices (such as electronic devices 400A-C, server device 500, and/or wireless device 300) of system **1** may cooperate and/or perform various aspects of the method(s) described herein to perform object detection. In other words, the features described with reference to Figs. 2A-2B may be performed by a single device. In some examples, one or more steps may be performed by one device, such as depicted in system 1, and one or more other steps may be performed by another device, as depicted in system 1. The disclosed method(s) may thus support arbitrary 3D object detection, and the method(s) may be carried out, in some examples, by a single device, and in other examples, by several devices.

Figs. 2A-2B shows a flow-chart illustrating an example method or methods 100, performed by an electronic device, such as one or more wireless devices 300, electronic devices 400, and/or server devices 500 of Figs. 1, 4-5, in an object detection system, for arbitrary 3D object detection.

An electronic device disclosed herein (such as electronic device 400 of Fig. 1) may, for example, be a camera. A server device (such as server device 500 of Fig. 1) may also be an electronic device.

The method 100 comprises obtaining S102 first data from a first 2D image of a scene and optionally second data from a second 2D image of the scene. The scene may be understood to be one or more objects in a field of view of one or more cameras. In other words, the scene may be the thing or things, including the environment, cameras can view and/or capture images of. The scene may be or may include elements of the interior and/or exterior of a building, including the area surrounding a building. In some examples, the scene may comprise a landscape. The scene may for example include person(s), people and/or other animate objects. The scene may include inanimate objects. In some examples, the scene is a room, office, laboratory, warehouse, or shipyard, such as the interior of such locations. The scene may be or may include the interior of a cargo container or container unit, such as a shipping container, cargo trailer, or the like. The scene may be the view from and/or within a vehicle.

The first data is for example associated with the first 2D image, such as an RGB image, of the scene. For example, the first data can be seen as first image data, such as indicative of one or more objects of the scene. In other words, the first data comprises first image data representative of at least one object part of the scene. The first data for example comprises RGB data indicative of one or more objects of the scene.

The second data is for example associated with the second 2D image, such as an RGB image, of the scene. For example, the second data can be seen as second image data, such as indicative of one or more objects of the scene. The second data for example comprises RGB data indicative of one or more objects of the scene.

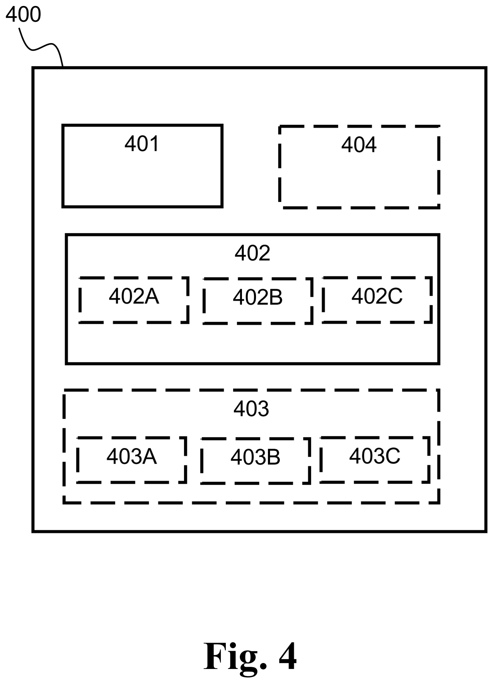

In one or more example methods, obtaining S102 the first data and the second data comprises capturing S102A the first 2D image and/or the second 2D image with an image sensor of one of the electronic devices. The electronic device may for example be a camera. The image sensor may be the image sensor 404 described with reference to Fig. 4. The first data may be obtained using the image sensor 404 shown in Fig. 4. For example, obtaining first data and/or second data may comprise obtaining, such as extracting, data from the first and/or second 2D image captured with the image sensor.

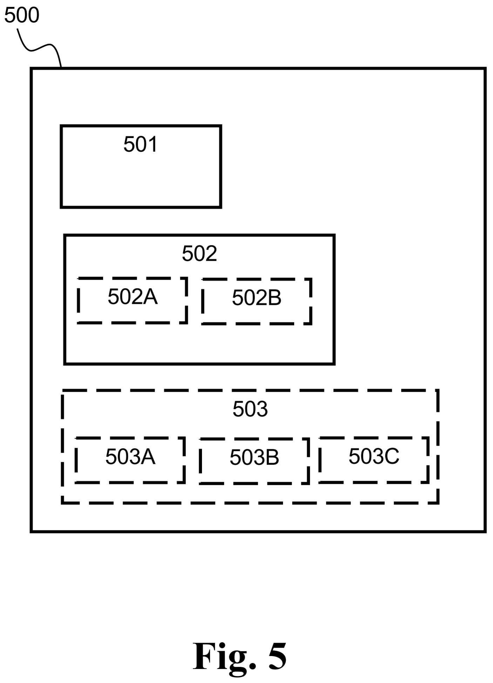

In one or more example methods, obtaining S102 the first data and the second data comprises receiving S102B signalling that comprises the first data and/or the second data. Receiving the signalling may be understood as receiving signalling via wired or wireless communication links. A wired communication link may include electrical signals transmitted using standardized and/or non-standardized wireless interfaces (such as described with reference to Figs. 4 and 5). A wireless communication link may include communication according to one or more communication protocols and/or standards (such as described with reference to Figs. 4 and 5). In one or more examples, the electronic device can be an electronic device external (such as the server device 500 of Fig. 1) to the camera (such as device 400 of Fig. 1). For example, the first data and/or second data may be obtained from the signalling. In one or more examples, the electronic device can use and/or communicate for processing purposes with an external device (such as the server device 500), and the first data and/or second data may be obtained from the signalling. The first 2D image and the second 2D image may each comprise red, green and blue, RGB, image data exclusive of depth information for any pixel of any of the first and second 2D images.

The method 100 comprises determining S104, based on the first data, a first 2D object mask of an object that appears in the first 2D image and the second 2D image. The first 2D object mask may be a first binary representation of the object. A second 2D object mask may be a second binary representation of the object. A binary representation may comprise a binary number, such as a string of binary numbers (for example digital numbers) representing the object. A binary representation may be a digital creation of an image sensor and/or processor extracted from data representative of the image.

Optionally, the method 100 comprises determining S106, based on the second data, a second 2D object mask of the object. The second 2D object mask may be a second binary representation of the object. The second binary representation of the object may be a string of binary numbers different from the first binary representation. For example, the first and second binary representations may have one or more different bit values indicative of different characteristics of each respective object mask.

In other words, an object mask (such as the first 2D object mask and the second 2D object mask) may be seen as a 2D indication of the position and/or size of an object of the scene. For example, determining S104 the first 2D object mask comprises determining an outline, such as a delineation, and/or pixels within such outline or delineation of an object that appears in the first 2D image and the second 2D image. For example, determining S106 the second 2D object mask comprises determining an outline, such as a delineation, of an object that appears in the first 2D image and the second 2D image. For example, a delineation may be seen as a delimitation, such as a contour, a boundary, or a limit of a surface of an object, and may include the pixels within such contour, boundary, or limit.

The first object mask (such as first 2D object mask) and the second object mask (such as second 2D object mask) are for example associated with the same object (such as a given chair, table, desk, etc.).

The method 100 comprises generating S108, for the first 2D object mask, a first depth map comprising first information indicative of a distance from the object to the camera. The first depth map may for example be seen as a map indicative of the depth, such as distance, from the object to the camera, for example when the camera is the electronic device. The first depth map for example is associated with a first point cloud (for example, the first point cloud may be determined based on the first from the first depth map) comprising first information indicative of a distance from the object to the camera. The first point cloud for example comprises one or more points indicative of a distance from the object to the camera.

Generating the first depth map may comprise applying S108A a monocular depth estimation (such as a monocular depth estimation model) to the first 2D image. Applying the monocular depth estimation may be understood as predicting the first depth map. The monocular depth estimation may be understood as depth estimation from a single image. For example, monocular depth estimation may comprise estimating the distance from the camera of each point in an image (or in a subsection of an image) by analyzing each pixel (or in a subsection of pixels) in an RGB image. In some examples, applying S108A the monocular depth estimation to the first 2D image comprises applying to the first 2D image one or more of: DepthAnythingv2 technique, ZoeDepth technique, and Metric3D technique, etc.

The method 100 comprises determining S110 a first scale parameter and a first shift parameter based on projecting the first information onto the second 2D image.

The first scale parameter may be indicative of the range and/or magnitude of a distance of a point to a camera, such as a depth value and/or as an estimated depth value for a point determined in a monocular depth estimation. The first scale parameter may be used to adjust such a range and/or magnitude. For example, the first scale parameter may be a numerical value (such as a scalar value). The first shift parameter may be indicative of a bias, inaccuracy, and/or ambiguity in a camera or system. The first shift parameter may be used to account for, bias and/or other inherent inaccuracies and/or ambiguities in, for example, the estimated depth value for a point. Account for may be understood to mean compensate for, correct for, and/or calibrate for. The first shift parameter may be a numerical value or values (such as one or more scalar values). In one or more examples, the first scale parameter may be one of a set of scale parameters, or the first scale parameter may comprise a set of scale parameters. In one or more examples, the first shift parameter may be one of a set of shift parameters, or the first shift parameter may comprise a set of shift parameters. Scale and/or shift parameters may be values that are relative to another value, such as a known value, such as control value, associated with a system and/or the electronic device. In other words, the method 100 for example comprises determining S110 a first scale parameter and a first shift parameter by projecting the first information onto the second 2D image. In other words, the first shift parameter comprises one or more parameters characterizing a point cloud.

In one or more example methods, projecting the first information onto the second 2D image comprises reprojecting S110A a first set of points onto the second 2D image based on the first coordinates and camera parameters. The second depth map may be generated based on the reprojecting. Projecting and/or reprojecting may be understood as mapping points from one image, such as from a portion of an image, onto another image (such as onto a portion of the other image). In one or more examples, the reprojecting yields second coordinates that are based on the first coordinates and the camera parameters. Camera parameters may comprise intrinsics (such as intrinsic features, for example, focal length, aperture, field-of-view, resolution) and poses (such as position information, for example cardinal position, orientation, tilt, pan angle) for the camera. In some examples, the method comprises obtaining the camera parameters via a calibration process associated with one or more cameras.

In one or more examples, the method 100 comprises filtering S110A1 a subset of points from the first set of points reprojected on the second 2D image. For example, reprojecting S110A the first set of points onto the second 2D image comprises filtering S110A1 a subset of points from the first set of points reprojected on the second 2D image. In one or more example methods, a point (such as each point) of the subset may have a misalignment that is greater than a threshold value. The threshold may be understood as a particular minimum accepted alignment, matching, and/or overlap. For example, when a projected point fails to match up and/or overlap with a corresponding point on the image receiving the projection by a percentage defined within the system, the misalignment may be greater than the threshold. In some examples, when the scale and/or shift parameter determined based on the projecting is outside a particular interval (such as greater than a value defined for the system or the electronic device), misalignment may be greater than the threshold. In other words, filtering S110A1 a subset of points for example comprises determining whether the misalignment of a point (such as each point) of the first set of points is greater than (or equal) to the threshold value, such as for provision of a filtered subset of points of the first set of points. For example, the filtered subset of points may comprise one or more points from the first set of points having a misalignment below the threshold value.

In one or more example methods, the method 100 comprises sampling S110A2 second additional data from the feature map (such as from the at least one point cloud) based on the second coordinates and the filtering. For example, reprojecting S110A the first set of points onto the second 2D image comprises sampling S110A2 second additional data from the feature map based on the second coordinates and the filtering. Sampling may include identifying data at certain intervals, selecting points at random, and/or focusing on particular areas or densities of data. The first scale parameter and/or the first shift parameter may be based on a relationship between the first additional data and the second additional data.

The method 100 comprises generating S114, for the first 2D object mask, a second depth map based on the first scale parameter and the first shift parameter, the second depth map comprising second information indicative of the distance from the object to the camera. The second depth map may for example be seen as a map indicative of the depth, such as distance, from the object to the camera, such as the electronic device. The second depth map for example comprises a second point cloud, such as a refined point cloud, comprising second information indicative of a distance from the object to the camera. The second point cloud for example comprises one or more points indicative of a distance from the object to the camera.

In one or more example methods, generating S114 the second depth map comprises selecting S114B a first set of points within the first 2D object mask. The first set of points may comprise first coordinates within the first information. In one or more example methods, the first set of points comprises random points (such as randomly selected points to form the first set of points) within the first 2D object mask. In one or more example methods, the first set of points comprises at least 200 points. In some examples, more or fewer points may be selected, including randomly selected. Points may for example be understood as pixels. Points may be locations (such as coordinates of an x,y-grid) in 2D, which may be different form a 3D point, which may correspond to several pixels. The first set of points, in one or more examples, may be pixels.

In some examples, generating S114, a second depth map comprises refining, for the first 2D object mask, the second depth map, such as based on the first scale parameter and/or the first shift parameter. The second depth map can for example be seen as a refined depth map, such as the first depth map after being refined, such as based on the first scale parameter and/or first shift parameter.

In one or more example methods, the method 100 comprises extracting S112 a feature map comprising at least one point cloud based on the first 2D object mask and/or the first information. A point cloud may be understood to be a group, such as set of points in 3D space (for example where points have x,y,z coordinates) which represent a 3D image; the point cloud may be understood to be a representation without lines connecting points of the cloud. In some examples, extracting S112 the feature map comprises extracting the feature map by applying a pre-trained model (such as a pre-trained foundation model), such as Contrastive Language-Image Pretraining, CLIP, and/or Distillation of knowledge with NO labels, Dinov2. In one or more example methods, generating S114 the second depth map may comprise sampling S114A from the feature map (such as from the at least one point cloud).

In one or more example methods, the method 100 comprises outputting S116 a first 3D representation of the object based on the first 2D object mask and the second depth map. In one or more example methods, the method 100 comprises outputting S118 a second 3D representation of the object. The second 3D representation may be based on the second 2D object mask and a third depth map that comprises third information indicative of another distance between the object and another camera. Generating the second depth map and, in some examples, one or more additional depth maps, may be referred to as refining the first depth map. In other words, refining the first depth map may comprise an iterative process of generating one or more additional depth maps after the second depth map, using the same or similar process as used to generate the second depth map. For example, outputting S116 the first 3D representation comprises determining, based on the first 2D object mask and/or second depth map, the first 3D representation. For example, outputting S118 the second 3D representation comprises determining, based on the second 2D object mask and/or third depth map, the second 3D representation.

In one or more examples methods, the method 100 comprises determining S120 a first bounding box for the object based on the first 3D representation. In one or more example methods, the method 100 comprises determining S122 a second bounding box for the object based on the first bounding box and the second 3D representation. The first and second bounding boxes may have different sizes. For example, the first and second bounding boxes may have different volumes. In some examples, a bounding box may be understood as a visible or invisible box (or representation of a box, such as an overlay) that represents the smallest box (such as cube) that contains one or more of (such as all) points of a point cloud. A bounding box may have eight (8) corners, twelve (12) edges, and six (6) faces. A bounding box may be axis aligned or orient aligned, which may be defined by the system. In some examples, determining the first and/or second bounding box comprises applying a bounding box prediction technique, such as a YoloWorld bounding box prediction technique.

In one or more example methods, outputting S116 the first 3D representation of the object comprises providing (such as displaying) the first 3D representation (such as via the electronic device 300 shown in Fig. 1), for example via a display of the electronic device. In one or more example methods, outputting S118 the second 3D representation of the object comprises providing (such as displaying) the second 3D representation of the object, (such as via the electronic device 300 shown in Fig. 1), for example via a display of the electronic device. In one or more example methods, the electronic device (such as via the electronic device 300 of Fig. 1) may provide (such as display) the first bounding box determined in S120 and/or the second bounding box determined in S122.

In one or more example methods, the method 100 comprises obtaining S101 at least one text string representative of the object. The first 2D object mask and/or the second 2D object mask may be determined based on the at least one text string. The at least one text string may be a written (such as in plain language) description of the object. In one or more example methods, the at least one text string may comprise an arbitrary value exclusive of training information for any neural network and/or model of the electronic device. In the context of other terms herein, the point cloud may be a representation of an object, a bounding box may indicate where the object is (such as relative to other aspects of an image and/or scene), and the text string may define the object. In other words, the text string may define what object should be detected (such as identified), and thus represented in a point cloud, which may then be located and/or contained within a bounding box, which may then be used to support other processes and/or activities. The text string may for example be seen as a text prompt, such as provided by a person. For example, the person may be user of the electronic device and/or wireless device that may for example input the text string to the electronic device and/or wireless device.

In some examples, outputting S116 (such as determining) the first 3D representation comprises outputting, such as determining, the first 3D representation based on at least one text string. For example, outputting S116 the first 3D representation may comprise matching an object of the scene with at least one text string, such as based on the first 2D object mask and/or second depth map.

In some examples, outputting S118 (such as determining) the second 3D representation comprises outputting, such as determining, the second 3D representation based on at least one text string. For example, outputting S118 the second 3D representation may comprise matching an object of the scene with at least one text string, such as based on the second 2D object mask and/or third depth map.

The object described, such as recited, in the text string may be different from any object or object class included in training data used to train a model implemented with the method(s) described herein. The method(s) may thus employ open-vocabulary detection in which objects, and/or classes of objects, detected may be different from objects and/or object classes used to train a model used for the detection.

Figs. 3 is a flow-chart illustrating an example method or process 200, performed by an electronic device in an object detection system, for arbitrary 3D object detection, according to this disclosure. The operations of the process 200 can be carried out by any of the electronic devices disclosed herein (such as one or more of wireless device 300, electronic devices 400-400C, server device 500 of Figs. 1, 4-5).

The process 200 is illustrative of a depth refinement process in the context of a more comprehensive object detection process. The process 200 may be understood as an example process corresponding with one or more aspects of the method(s) 100.

Process 200 may take as an input first and second 2D images 202 (such as multi-view RGB images of a scene). This may be understood as an example implementation and/or optional aspect corresponding with S102.

The process 200 may take as an input at least one text string 204). The at least one text string 204 may be a list of objects to detect, a category of objects to detect, a name or description for one or more objects to detect, and/or an acronym or jargon for one or more objects to detect. This may be understood as an example implementation and/or optional aspect corresponding with S101 of Figs. 2A-B.

The example process 200 may also take as an input camera parameters 212 (such as intrinsics and poses). This may be understood as an example implementation and/or optional aspect corresponding with S110A of Figs. 2A-B.

For each image, the method may include generating, such as predicting, 206 a depth map using a monocular depth estimation model. Such depth estimation model may be understood to be or include pretrained neural network models and may be understood as an example implementation and/or optional aspect corresponding with S108 of Figs. 2A-B.

The process 200 may include determining, such as predicting, 208 object masks corresponding to the at least one text string using a 2D open-vocabulary segmentation model. Such determination may be understood to be or include pretrained neural network models and may result in per-image depth masks 210. This may be understood as an example implementation and/or optional aspect corresponding with S104 and/or S106 of Figs. 2A-B.

The process 200 may include extracting 214 high dimensional feature maps (such as point cloud(s)) with a pre-trained foundation model. This may be understood as an example implementation and/or optional aspect corresponding with S112.

The process 200 may include depth refining 216 for each 2D object mask. This may include refining the predicted depth map by optimizing (such as applying a gradient reduction until a system-defined value (such as threshold) is reached) scale and shift parameters. This may be understood as an example implementation and/or optional aspect corresponding with S114 of Figs. 2A-B.

Depth refining 216 may optionally include (such as at each iteration of an optimization loop) several additional steps, such as one or more of steps 216A-216H. For example, it may include selecting 216A points within a depth mask. This may include selecting N random points with coordinates *(ui, vi)* within the mask. This may be understood as an example implementation and/or optional aspect corresponding with S114B of Figs. 2A-B.

Depth refining 216 may optionally include computing 216B current depths, such as of one or more points associated with the depth mask, according to the equation *di = aD(ui, vi) +* b, where *D(ui,vi)* is the predicted depth at coordinates *(ui,vi)*, and a and b are the scale and shift parameters for the mask. This may be understood as an example implementation and/or optional aspect of S110A corresponding with Figs. 2A-B.

Depth refining 216 may optionally include sampling 216C high-dimensional features *F(ui,vi)* from the feature map (such as by bilinear interpolation). This may be understood as an example implementation and/or optional aspect corresponding with S112 of Figs. 2A-B.

Depth refining 216 may optionally include reprojecting 216D the selected points to all other views using their current depths and the camera parameters, yielding coordinates *(ui', vi')* in those images. This may be understood as an example implementation and/or optional aspect of S110A corresponding with Figs. 2A-B.

Depth refining 216 may optionally include filtering 216E out invalid points that are reprojected outside of the views and/or whose depth disagree significantly with the estimated depths in the target view. This may be understood as an example implementation and/or optional aspect corresponding with S110A1 of Figs. 2A-B.

Depth refining 216 may optionally include sampling 216F features *F'(ui', vi')* in the target views. This may be understood as an example implementation and/or optional aspect of S110A2 corresponding with Figs. 2A-B.

Depth refining 216 may optionally include calculating 216G the loss as the mean cosine similarity loss between the feature vectors *F(ui,vi)* and their reprojections *F'(ui', vi').* For example, the loss for each sample may be calculated as 1 *- cos(F(ui, vi), F'(ui', vi')).* This may be understood as an example implementation and/or optional aspect of S110A corresponding with Figs. 2A-B.

Depth refining 216 may optionally include updating 216H the scale parameter (a) and shift parameter (b), such as via back-propagation. This may be understood as an example and/or optional aspect of S110A of Figs. 2A-B.

The process 200 may include fusing 218 the object masks, which may comprise using the refined depth maps and camera parameters, yielding one point cloud per mask. This may be understood as an example implementation and/or optional aspect corresponding with S116 of Figs. 2A-B.

Fusing 218 the object masks may include calculating bounding boxes around each point cloud. This may be understood as an example implementation and/or optional aspect corresponding with S120 of Figs. 2A-B.

Fusing 218 the object masks may include match point clouds corresponding to the same object observed from different cameras based on the intersection of their bounding boxes. This may be understood as an example implementation and/or optional aspect corresponding with S118 of Figs. 2A-B.

The process 200 may include outputting 220 object bounding box(es), which may include merging matched point clouds and calculating a new bounding box. This may be understood as an example implementation and/or optional aspect of S122 corresponding with Figs. 2A-B.

Once outputted, an electronic device 400 may detect the object (such as object 52 as shown in Fig. 1) based on the bounding box(es). The process 200 thus provides for detecting arbitrary 3D objects from multiple 2D images.

Fig. 4 is a block diagram illustrating an example electronic device 400 according to this disclosure. The electronic device 400 comprises memory circuitry 401, processor circuitry 402, and, optionally, interface 403, which may include one or more wired or wireless interfaces. In one or more examples, electronic device 400 comprises an image sensor 404. The electronic device 400 may be configured to perform any of the methods disclosed in, or described with reference to, Figs. 2A-2B. In other words, the electronic device 400 may be configured for detection of arbitrary 3D objects. In one or more examples, electronic device 400 is a camera or other device with an image sensor capable of capturing images. In some examples, the electronic device 400 may be seen as 3D object (such as arbitrary object) detection device. The electronic device 400 may be a wireless device (such as wireless device 300 of Fig. 1)

The electronic device 400 is configured to communicate with one or more other electronic devices, such as a camera(s), server, or wireless device (such as a mobile phone, laptop, tablet) using a wired or wireless communication system.

The interface 403 is configured for wired and/or wireless communications, and it may include wired interface 403A, wireless interface 403B, and/or interface port 403C. Wired interface 403A may be an interface for communication via a pair of wires, coaxial cable, Ethernet, HDMI, USB or other standard or non-standard physical connection. Wireless interface 403B may be an interface for communication via a wireless communication system(s), such as a 3GPP system, a WLAN (for example WiFi), UWB, Bluetooth, and/or NFC. Interface port 403C may be a USB port, which may support one or more USB standard connectors, or it may be another interface port. Additionally or alternatively, interface 403 may include an interface for optical communication, such as via fiberoptics. In some examples, interface 403 is coupled with a user interface or display (not shown) of electronic device 400.

Image sensor 404 may comprise one or more CMOS image sensors and corresponding optics, which may be configured to capture images of a scene.

The electronic device 400 is configured to obtain (such as via the interface 403 and/or via the image sensor 404) first data from a first 2D image of a scene and/or second data from a second 2D image of the scene. In one or more examples, the electronic device 400 captures first data from the first 2D image of the scene via the image sensor 404 and receives second data from the second 2D image of the scene via the interface 403 from another electronic device.

The electronic device 400 is configured to determine (such as via processor circuity 402) a first 2D object mask of an object that appears in the first 2D image and the second 2D image. The electronic device 400 is configured to determine (such as via processor circuitry 402) a second 2D object mask of the object.

The electronic device 400 is configured to generate (such as via processor circuitry 402) a first depth map comprising first information indicative of a distance from the object to the camera.

The electronic device 400 is configured to determine (such as via processor circuitry 402) a first scale parameter and a first shift parameter based on projecting the first information onto the second 2D image.

The electronic device 400 is configured to generate (such as via processor circuitry 402) a second depth map based on the first scale parameter and the first shift parameter.

In one or more examples, electronic device 400 is configured to obtain, for example, via interface 403, at least one text string representative of the object. In some examples, the electronic device 400 is configured to output, for example, via interface 403, a first 3D representation of the object based on the first 2D object mask and the second depth map. In some examples, the electronic device 400, for example, via interface 403, may output a second 3D representation of the object.

Processor circuitry 402 may comprise an image processor 402A, a graphics processor 402B, and/or an application processor 402C. Processor circuitry 402 may include a wireless chip set, which may support wireless interface 403B. Processor circuitry 402, or one or more of the processors 402A, 402B, and/or 402C, is optionally configured to perform any of the operations disclosed in Figs. 2A-2B (such as any one or more of S101, S102, S102A, S102B, S104, S106, S108, S108A, S110, S110A, S110A1, S110A2, S112, S114A, S114B, S116, S118, S120, S122). The operations of the electronic device 400 may be embodied in the form of executable logic routines (for example, lines of code, software programs, etc.) that are stored on a non-transitory computer readable medium (for example, memory circuitry 401) and are executed by processor circuitry 402).

Furthermore, the operations of the electronic device 400 may be considered a method that the electronic device 400 is configured to carry out. Also, while the described functions and operations may be implemented in software, such functionality may also be carried out via dedicated hardware or firmware, or some combination of hardware, firmware and/or software.

Memory circuitry 401 may be one or more of a buffer, a flash memory, a hard drive, a removable media, a volatile memory, a non-volatile memory, a random access memory (RAM), or other suitable device. In a typical arrangement, memory circuitry 401 may include a non-volatile memory for long term data storage and a volatile memory that functions as system memory for processor circuitry 402. Memory circuitry 401 may exchange data with processor circuitry 402 over a data bus. Control lines and an address bus between memory circuitry 401 and processor circuitry 402 also may be present (not shown in Fig. 4). Memory circuitry 401 is considered a non-transitory computer readable medium.

Memory circuitry 401 may be configured to store data or instructions related to: at least one text string, 2D images, 2D object mask(s), depth map(s), information indicative of distance between an object and a camera (such as the electronic device 400), scale parameter(s), shift parameter(s), feature map(s), point cloud(s), 3D representation(s), and/or bounding box(es).

Fig. 5 is a block diagram illustrating an example server device 500 according to this disclosure. The server device 500 comprises memory circuitry 501, processor circuitry 502, and, optionally, interface 503, which may include one or more wired or wireless interfaces. The server device 500 may be configured to perform any of the methods disclosed in, or described with reference to, Figs. 2A-2B. In other words, the server device 500 may be configured for detection of arbitrary 3D objects. In one or more examples, server device 500 can be seen as a server. The manger device 500 may for example be seen as a device configured to communicate with and/or manage devices in a system, such as cameras, which may for example be configured to capture one or more images of a scene. The server device 500 may be a wireless device (such as wireless device 300 of Fig. 1).

The server device 500 is configured to communicate with one or more other electronic devices, such as a camera(s), server(s), or wireless device(s) (such as a mobile phone, laptop, tablet) using a wired or wireless communication system.

The interface 503 is configured for wired and/or wireless communications, and it may include wired interface 503A, wireless interface 503B, and/or interface port 503C. Wired interface 503A may be an interface for communication via a pair of wires, coaxial cable, Ethernet, HDMI, USB or other standard or non-standard physical connection. Wireless interface 503B may be an interface for communication via a wireless communication system(s), such as a 3GPP system, a WLAN (for example WiFi), UWB, Bluetooth, and/or NFC. Interface port 503C may be a USB port, which may support one or more USB standard connectors, or it may be another interface port. Additionally or alternatively, interface 503 may include an interface for optical communication, such as via fiberoptics. In some examples, interface 503 is coupled with a user interface or display (not shown) of server device 500.

In some examples, the server device 500 is configured to obtain (such as via memory circuitry 501 and/or interface 503) first data from a first 2D image of a scene and/or second data from a second 2D image of the scene. In some examples, the server device 500 is configured to determine (such as via processor circuity 502) a first 2D object mask of an object that appears in the first 2D image and the second 2D image. In some examples, the server device 500 is configured to determine (such as via processor circuitry 502) a second 2D object mask of the object. In some examples, the server device 500 is configured to generate (such as via the processor circuitry 502) a first depth map comprising first information indicative of a distance from the object to the camera. In some examples, the server device 500 is configured to determine (such as via processor circuitry 502) a first scale parameter and a first shift parameter based on projecting the first information onto the second 2D image. In some examples, the server device 500 is configured to generate (such as via processor circuitry 502) a second depth map based on the first scale parameter and the first shift parameter. In some examples, the server device 500 is configured to generate (such as via the processor circuitry 502), for the first 2D object mask, a second depth map based on the first scale parameter and the first shift parameter, the second depth map comprising second information indicative of the distance from the object to the camera.

In one or more examples, server device 500 is configured to obtain, for example, via interface 503, at least one text string representative of the object. In some examples, the server device 500 is configured to output, for example, via interface 503, a first 3D representation of the object based on the first 2D object mask and the second depth map. In some examples, the server device 500, for example, via interface 503, may output a second 3D representation of the object.

Processor circuitry 502 may comprise an image processor 502A, a graphics processor 502B, and/or an application processor 502C. Processor circuitry 502 may include a wireless chip set, which may support wireless interface 503B. Processor circuitry 503, or one or more of the processors 502A, 502B, and/or 502C, is optionally configured to perform any of the operations disclosed in Figs. 2A and 2B (such as any one or more of S101, S102, S102A, S102B, S104, S106, S108, S108A, S110, S110A, S110A1, S110A2, S112, S114A, S114B, S116, S118, S120, S122). The operations of the server device 500 may be embodied in the form of executable logic routines (for example, lines of code, software programs, etc.) that are stored on a non-transitory computer readable medium (for example, memory circuitry 501) and are executed by processor circuitry 502).

Furthermore, the operations of the server device 500 may be considered a method that the server device 500 is configured to carry out. Also, while the described functions and operations may be implemented in software, such functionality may also be carried out via dedicated hardware or firmware, or some combination of hardware, firmware and/or software.

Memory circuitry 501 may be one or more of a buffer, a flash memory, a hard drive, a removable media, a volatile memory, a non-volatile memory, a random access memory (RAM), or another suitable device. In a typical arrangement, memory circuitry 501 may include a non-volatile memory for long term data storage and a volatile memory that functions as system memory for processor circuitry 502. Memory circuitry 501 may exchange data with processor circuitry 502 over a data bus. Control lines and an address bus between memory circuitry 501 and processor circuitry 502 also may be present (not shown in Fig. 5). Memory circuitry 501 is considered a non-transitory computer readable medium.

Memory circuitry 501 may be configured to store data or instructions related to: at least one text string, 2D images, 2D object mask(s), depth map(s), information indicative of distance between an object and a camera, scale parameter(s), shift parameter(s), feature map(s), point cloud(s), 3D representation(s) and/or bounding box(es).

Embodiments of methods and products (for example electronic devices) according to the disclosure are set out in the following items:
Item 1. A method, performed by an electronic device, for detection of arbitrary three-dimensional, 3D, objects, the method comprising:
   - obtaining first data from a first two-dimensional, 2D, image of a scene and second data from a second 2D image of the scene;
   - determining, based on the first data, a first 2D object mask of an object that appears in the first 2D image and the second 2D image;
   - determining, based on the second data, a second 2D object mask of the object;
   - generating, for the first 2D object mask, a first depth map comprising first information indicative of a distance from the object to a camera;
   - determining a first scale parameter and a first shift parameter based on projecting the first information onto the second 2D image; and
   - generating, for the first 2D object mask, a second depth map based on the first scale parameter and the first shift parameter, the second depth map comprising second information indicative of the distance from the object to the camera.
Item 2. The method according to item 1, wherein generating the first depth map comprises applying a monocular depth estimation to the first 2D image.
Item 3. The method according to any of the previous items, the method comprising extracting a feature map comprising at least one point cloud based on the first 2D object mask and/or the first information, wherein generating the second depth map comprises sampling first additional data from the feature map.
Item 4. The method according to any of the previous items, wherein generating the second depth map comprises selecting a first set of points within the first 2D object mask, wherein the first set of points comprises first coordinates within the first information.
Item 5. The method according to item 4, wherein the first set of points comprises random points within the first 2D object mask.
Item 6. The method according to any of items 4-5, wherein the first set of points comprises at least 200 points.
Item 7. The method according to any of items 4-6, wherein projecting the first information onto the second 2D image comprises reprojecting the first set of points onto the second 2D image based on the first coordinates and camera parameters, wherein the second depth map is generated based on the reprojecting.
Item 8. The method according to item 7, wherein the reprojecting yields second coordinates that are based on the first coordinates and the camera parameters.
Item 9. The method according to any of items 7-8, wherein the camera parameters comprise intrinsics and/or poses for the camera.
Item 10. The method according to any of items 8-9, the method comprising:
   - filtering a subset of points from the first set of points reprojected on the second 2D image, wherein a point of the subset has a misalignment that is greater than a threshold value; and
   - sampling second additional data from the feature map based on the second coordinates and the filtering;
   - wherein the second scale parameter and/or the second shift parameter are based on a relationship between the first additional data and the second additional data.
Item 11. The method according to any of the previous items, the method comprising outputting a first 3D representation of the object based on the first 2D object mask and the second depth map.
Item 12. The method according to any of the previous items, the method comprising outputting a second 3D representation of the object, the second 3D representation being based on the second 2D object mask and a third depth map that comprises third information indicative of another distance between the object and another camera.
Item 13. The method according to item 12, the method comprising:
   - determining a first bounding box for the object based on the first 3D representation; and
   - determining a second bounding box for the object based on the first bounding box and the second 3D representation.
Item 14. The method according to any of the previous items, the method comprising obtaining at least one text string representative of the object, wherein the first 2D object mask and/or the second 2D object mask are determined based on the at least one text string.
Item 15. The method according to item 14, wherein the at least one text string comprises an arbitrary value exclusive of training information for any neural network of the electronic device.
Item 16. The method according to any of the previous items, wherein obtaining the first data from the first two-dimensional, 2D, image of the scene and the second data of the second 2D image of the scene comprises capturing the first 2D image with an image sensor of the electronic device, wherein the electronic device is the camera and the first data is obtained from the image sensor.
Item 17. The method according to any of the previous items, wherein obtaining the first data from the first two-dimensional, 2D, image of the scene and the second data of the second 2D image of the scene comprises receiving signaling that comprises the first data and/or the second data, wherein the electronic device comprises a processing device external to the camera.
Item 18 The method according to any of the previous items, wherein the first 2D image and the second 2D image each comprise red, green and blue, RGB, image data exclusive of depth information for any pixel of any of the first 2D image and the second 2D image.
Item 19. An electronic device comprising memory circuitry and processor circuitry, wherein the electronic device is configured to:
   - obtain first data from a first two-dimensional, 2D, image of a scene and second data from a second 2D image of the scene;
   - determine, based on the first data, a first 2D object mask of an object that appears in the first 2D image and the second 2D image;
   - determine, based on the second data, a second 2D object mask of the object;
   - generate, for the first 2D object mask, a first depth map comprising first information indicative of a distance from the object to the camera;
   - determine a first scale parameter and a first shift parameter based on projecting the first information onto the second 2D image; and
   - generate for the first 2D object mask, a second depth map based on the first scale parameter and the first shift parameter, the second depth map comprising second information indicative of the distance from the object to the camera.
Item 20. The electronic device according to item 19, the electronic device configured to generate the first depth map by applying a monocular depth estimation to the first 2D image.
Item 21. The electronic device according to any of items 18-19, the electronic device configured to:
   - extract a feature map comprising at least one point cloud based on the first 2D object mask and/or the first information; and
   - generate the second depth map based on sampling first additional data from the feature map.
Item 22. The electronic device according to any of items 18-20, the electronic device configured to generate the second depth map based on selecting a first set of points within the first 2D object mask, wherein the first set of points comprises first coordinates within the first information.
Item 23. The electronic device according to item 22, wherein the first set of points comprises random points within the first 2D object mask.
Item 24. The electronic device according to any of items 22-23, wherein the first set of points comprises at least 200 points.
Item 25. The electronic device according to any of items 22-24, the electronic device configured to:
   - project the first information onto the second 2D image by reprojecting the first set of points onto the second 2D image based on the first coordinates and camera parameters; and
   - generate the second depth map based on the reprojecting.
Item 26. The electronic device according to item 25, wherein the reprojecting yields second coordinates that are based on the first coordinates and the camera parameters.
Item 27. The electronic device according to any of items 25-26, wherein the camera parameters comprise intrinsics and/or poses for the camera.
Item 28. The electronic device according to any of items 26-27, the electronic device configured to:
   - filter a subset of points from the first set of points reprojected on the second 2D image, wherein each point of the subset has a misalignment that is greater than a threshold value; and
   - sample second additional data from the feature map based on the second coordinates and the filtering;
   - wherein the first scale parameter and/or the first shift parameter are based on a relationship between the first additional data and the second additional data.
Item 29. The electronic device according to any of items 18-28, the electronic device configured to output a first 3D representation of the object based on the first 2D object mask and the second depth map.
Item 30. The electronic device according to item 29, the electronic device configured to output a second 3D representation of the object, the second 3D representation being based on the second 2D object mask and a third depth map that comprises third information indicative of another distance between the object and another camera.
Item 31. The electronic device according to item 30, the electronic device configured to:
   - determine a first bounding box for the object based on the first 3D representation; and
   - determine a second bounding box for the object based on the first bounding box and the second 3D representation.
Item 32. The electronic device according to any of items 18-31, the electronic device configured to:
   - obtain at least one text string representative of the object; and
   - determine the first 2D object mask and/or the second 2D object mask based on the at least one text string.
Item 33. The electronic device according to item 32, wherein the at least one text string comprises an arbitrary value exclusive of training information for any neural network of the electronic device.
Item 34. The electronic device according to any of items 18-33, the electronic device comprising an image sensor and configured to:
   - capture the first 2D image with the image sensor; and
   - obtain the first data from the image sensor.
Item 35. The electronic device according to any of items 18-34, the electronic device comprising a processing device external to the camera, the electronic device configured to receive signaling that comprises the first data and/or the second data.
Item 36. The electronic device according to any of items 18-35, wherein the first 2D image and the second 2D image each comprise red, green and blue, RGB, image data exclusive of depth information for any pixel of any of the first 2D image and the second 2D image.
Item 37. The electronic device according to any of items 18-36, the electronic device comprising an image sensor and/or an image processor.
Item 38. The electronic device according to any of items 18-37, the electronic device comprising a graphics processor, an application processor, or a wireless chipset, or any combination thereof.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering.

Furthermore, the labelling of a first element does not imply the presence of a second element and vice versa.

It may be appreciated that Figs. 1-5 comprise some circuitries or operations which are illustrated with a solid line and some circuitries or operations which are illustrated with a dashed line. Circuitries or operations which are comprised in a solid line are circuitries or operations which are comprised in the broadest example embodiment. Circuitries or operations which are comprised in a dashed line are example embodiments which may be comprised in, or a part of, or are further circuitries or operations which may be taken in addition to circuitries or operations of the solid line example embodiments. It should be appreciated that these operations need not be performed in order presented. Furthermore, it should be appreciated that not all of the operations need to be performed. The example operations may be performed in any order and in any combination.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims, that the example embodiments may be implemented at least in part by means of both hardware and software, and that several "means", "units" or "devices" may be represented by the same item of hardware.

The various example methods, devices, nodes and systems described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program circuitries may include routines, programs, objects, components, data structures, etc. that perform specified tasks or implement specific abstract data types. Computer-executable instructions, associated data structures, and program circuitries represent examples of program code for executing steps of the methods disclosed herein. The particular sequence of such executable instructions or associated data structures represents examples of corresponding acts for implementing the functions described in such steps or processes.

Although features have been shown and described, it will be understood that they are not intended to limit the claimed disclosure, and it will be made obvious to those skilled in the art that various changes and modifications may be made without departing from the scope of the claimed disclosure. The specification and drawings are, accordingly, to be regarded in an illustrative rather than restrictive sense. The claimed disclosure is intended to cover all alternatives, modifications, and equivalents.

## Claims

1. A method, performed by an electronic device, for detection of arbitrary three-dimensional, 3D, objects, the method comprising:
- obtaining (S102) first data from a first two-dimensional, 2D, image of a scene and second data from a second 2D image of the scene;
- determining (S104), based on the first data, a first 2D object mask of an object that appears in the first 2D image and the second 2D image;
- determining (S106), based on the second data, a second 2D object mask of the object;
- generating (S108), for the first 2D object mask, a first depth map comprising first information indicative of a distance from the object to a camera;
- determining (S110) a first scale parameter and a first shift parameter based on projecting the first information onto the second 2D image; and
- generating (S114), for the first 2D object mask, a second depth map based on the first scale parameter and the first shift parameter, the second depth map comprising second information indicative of the distance from the object to the camera.

2. The method according to claim 1, wherein generating the first depth map comprises applying a monocular depth estimation to the first 2D image.

3. The method according to any of the previous claims, the method comprising extracting a feature map comprising at least one point cloud based on the first 2D object mask and/or the first information, wherein generating the second depth map comprises sampling first additional data from the feature map.

4. The method according to any of the previous claims, wherein generating the second depth map comprises selecting a first set of points within the first 2D object mask, wherein the first set of points comprises first coordinates within the first information.

5. The method according to claim 4, wherein the first set of points comprises random points within the first 2D object mask; and/or wherein the first set of points comprises at least 200 points.

6. The method according to any of claims 4-5, wherein projecting the first information onto the second 2D image comprises reprojecting the first set of points onto the second 2D image based on the first coordinates and camera parameters, wherein the second depth map is generated based on the reprojecting.

7. The method according to claim 6, wherein the reprojecting yields second coordinates that are based on the first coordinates and the camera parameters.

8. The method according to any of claims 6-7, wherein the camera parameters comprise intrinsics and poses for the camera.

9. The method according to any of claims 7-8, the method comprising:
- filtering a subset of points from the first set of points reprojected on the second 2D image, wherein a point of the subset has a misalignment that is greater than a threshold value; and
- sampling second additional data from the feature map based on the second coordinates and the filtering;
- wherein the first scale parameter and/or the first shift parameter are based on a relationship between the first additional data and the second additional data.

10. The method according to any of the previous claims, the method comprising
- outputting a first 3D representation of the object based on the first 2D object mask and the second depth map; and/or;
- outputting a second 3D representation of the object, the second 3D representation being based on the second 2D object mask and a third depth map that comprises third information indicative of another distance between the object and another camera.

11. The method according to claim 10, the method comprising:
- determining a first bounding box for the object based on the first 3D representation; and
- determining a second bounding box for the object based on the first bounding box and the second 3D representation.

12. The method according to any of the previous claims, the method comprising obtaining at least one text string representative of the object, wherein the first 2D object mask and/or the second 2D object mask are determined based on the at least one text string; wherein the at least one text string comprises an arbitrary value exclusive of training information for any neural network of the electronic device.

13. The method according to any of the previous claims, wherein obtaining the first data from the first two-dimensional, 2D, image of the scene and the second data of the second 2D image of the scene comprises:
- capturing the first 2D image with an image sensor of the electronic device, wherein the electronic device is the camera and the first data is obtained from the image sensor; and/or
- receiving signaling that comprises the first data and/or the second data, wherein the electronic device comprises a processing device external to the camera.

14. The method according to any of the previous claims, wherein the first 2D image and the second 2D image each comprise red, green and blue, RGB, image data exclusive of depth information for any pixel of any of the first 2D image and the second 2D image.

15. An electronic device comprising memory circuitry and processor circuitry, wherein the electronic device is configured to:
- obtain first data from a first two-dimensional, 2D, image of a scene and second data from a second 2D image of the scene;
- determine, based on the first data, a first 2D object mask of an object that appears in the first 2D image and the second 2D image;
- determine, based on the second data, a second 2D object mask of the object;
- generate, for the first 2D object mask, a first depth map comprising first information indicative of a distance from the object to the camera;
- determine a first scale parameter and a first shift parameter based on projecting the first information onto the second 2D image; and
- generate for the first 2D object mask, a second depth map based on the first scale parameter and the first shift parameter, the second depth map comprising second information indicative of the distance from the object to the camera.
